# EUROPEAN PATENT APPLICATION

(11) **EP 4 198 108 A1**
(43) Date of publication of application: **21.06.2023**
(21) Application number: 21215708.5
(22) Date of filing: 17.12.2021
(51) Int. Cl.: C10G 3/00, B01J 31/16, C07C 29/151, C10G 50/00

(54) **METHOD AND PLANT FOR OBTAINING A MAIN PRODUCT STREAM FOR THE PRODUCTION OF TRANSPORT FUEL**

(71) Applicant: Metafuels AG, 8135 Langnau am Albis (CH); Paul Scherrer Institut, 5232 Villigen (CH)
(72) Inventor: HACKETT, Leigh, 8135 Langnau am Albis (DE); KOSS, Ullrich, 61348 Bad Homburg (DE); KAPOOR, Saurabh, 5405 Dättwil (CH); RANOCCHIARI, Marco, 4310 Rheinfelden (CH); VAN BOKHOVEN, Jeroen, 8044 Zürich (CH)
(74) Representative: Patentanwälte Bauer Vorberg Kayser

(57) **Abstract**

The invention relates to a method for obtaining a main product stream (1) with hydrocarbons from a reactant (3), which reactant (3) comprises at least one substance of the group of alcohols and the group of ethers, for the production of transport fuel (8), wherein the reactant (3) is fed to a prereactor stage (10), in which prereactor stage (10) the reactant (3) is at least partially catalytically converted into an intermediate product stream (11), wherein the molar proportion of C2 to C5 hydrocarbon among all hydrocarbon of the inter-mediate product stream (11) is at least 55 percent, wherein the intermediate product stream (11) is fed to a main reactor stage (12), in which main reactor stage (12) the hydrocarbons of the intermediate product stream (11) are oligomerized by means of a main reactor stage catalyst for obtaining the main product stream (1), wherein the weight proportion of C10 to C16 hydrocarbons among all hydrocarbons of the main product stream (1) is at least 15 percent. The method according to the invention is characterized in that the main reactor stage catalyst is a metal organic framework catalyst. The invention further relates to a corresponding plant for obtaining a main product stream (1).

## Description

The invention relates to a method for obtaining a main product stream with hydrocarbons from a reactant, which reactant comprises at least one substance of the group of alcohols and the group of ethers, for the production of transport fuel according to the pre-characterizing part of claim 1 as well as a plant for obtaining a main product stream with hydrocarbons from a reactant, which reactant comprises at least one substance of the group of alcohols and the group of ethers, for the production of transport fuel according to the pre-characterizing part of claim 18.

The industries in the transportation sector are faced with the increasing necessity to deploy sustainable fuels. In the case of the aviation industry, these are called sustainable aviation fuels (SAF). In order to meet the respective targets, new solutions are needed.

One of the fundamental approaches to improve sustainability is the conversion route from an alcohol or an ether to a transport fuel. An example for such an approach is the conversion of methanol to jet fuel. The paper "Methanol to High-Octane Gasoline within a Market-Responsive Biorefinery Concept Enabled by Catalysis" by Ruddy et al describes the production of gasoline and jet fuel from methanol as an intermediate, which methanol is synthesized from synthesis gas which in turn is obtained from biomass. However, the catalysts used for such processes result in a relatively low hydrocarbon yield in the C₁₀-C₁₆ range, which is of particular interest for transport fuels and in particular for jet fuel.

The object of the invention is therefore to provide an improved conversion route from an alcohol or an ether to a transport fuel which provides a better yield in the desired hydrocarbon range in a way that is also scalable for large-scale production.

With respect to the method for obtaining a main product stream with hydrocarbons from a reactant, which reactant comprises at least one substance of the group of alcohols and the group of ethers, for the production of transport fuel according to the pre-characterizing part of claim 1 the problem of the invention is solved by the features of the characterizing part of claim 1. With respect to the plant for obtaining a main product stream with hydrocarbons from a reactant, which reactant comprises at least one substance of the group of alcohols and the group of ethers, for the production of transport fuel according to the pre-characterizing part of claim 18 the problem of the invention is solved by the features of the characterizing part of claim 18.

Underlying the invention is the realization that, firstly, a two-step process for the conversion of the reactant - which comprises either an alcohol, an ether or both - may be used in which first that reactant is catalytically converted into an intermediate stream with lighter hydrocarbons and that intermediate stream is subsequently subjected to an oligomerization reaction to obtain hydrocarbon of the desired higher chain lengths. Secondly, it has been found that a metal organic framework catalyst for the oligomerization reaction is particularly useful to obtain the high yield in the desired range for transport fuels.

The method according to the invention is for obtaining a main product stream with hydrocarbons from a reactant, which reactant comprises at least one substance of the group of alcohols and the group of ethers, for the production of transport fuel. In other words, the main product stream comprises hydrocarbons, which may in principle be any suitable hydrocarbons. The reactant may comprise any number of substances. At least one of these substances belongs to the group of alcohols or the group of ethers. The reactant may comprise more than one substance from the group of alcohols and, in addition or alternatively, from the group of ethers. The transport fuel may be fuel for any kind of transport system or vehicle.

In the method according to the invention, the reactant is fed to a prereactor stage, in which prereactor stage the reactant is at least partially catalytically converted into an intermediate product stream, wherein the molar proportion of C2 to C5 hydrocarbon among all hydrocarbon of the intermediate product stream is at least 55 percent. For this catalytic conversion, any suitable type of catalyst may be used. The prereactor stage may comprise an arbitrary number of reactors. The prereactor stage may in particular comprise a fluidized bed reactor or a fixed bed reactor. Preferably, the prereactor pressure in the prereactor is between 1 bara and 20 bara, in particular between 2 bara and 8 bara. It is preferred that the prereactor temperature in the prereactor is between 300° C and 600° C. In particular, the prereactor temperature in the prereactor may be between 400°C and 550° C.

In the method according to the invention, the intermediate product stream is fed to a main reactor stage, in which main reactor stage the hydrocarbons of the intermediate product stream are oligomerized by means of a main reactor stage catalyst for obtaining a main product stream, wherein the weight proportion of C10 to C16 hydrocarbons among all hydrocarbons of the main product stream is at least 15 percent. The main reactor stage may comprise an arbitrary number of reactors.

The method according to the invention is characterized in that the main reactor stage catalyst is a metal organic framework catalyst. Metal organic frameworks (MOFs) refer to one-, two- or three-dimensional porous networks, comprising metal ions or clusters coordinated to organic ligands. They may be referred to as a subclass of coordination polymers. The organic ligands may be referred to as linkers. The metal ions or clusters may be referred to as nodes. The MOF comprises a lattice (MOF lattice) - being formed by the nodes and linkers - which may be tailored in a way that a catalytically active site can be hosted in pores or cavities of the MOF lattice. The size of the pores or cavities may for example be varied by tailoring the linkers. The catalytically active site hosted in the MOF lattice forms - in combination with the MOF lattice - a MOF composition that may - besides the MOF lattice and the catalytically active site - comprise other components. The catalytically active site may be bound or coordinated to the MOF lattice. Binding the catalytically active site to the MOF lattice may be associated with one or more chemical bonds (including coordinative bonds) between the catalytically active site and the MOF lattice or may be associated with other chemical or physical interactions between the catalytically active site and the MOF lattice. Also, the catalytically active site may be trapped or physically enclosed within the MOF lattice. Alternatively, the catalytically active site may be part of one or more of the nodes or one or more of the linkers. In such a case one or more of the nodes or one or more of the linkers may directly form the catalytically active site. The MOF lattice may be tailored in a way that hydrocarbons may reach the catalytically active sites. In particular, the pore-sizes or the size of cavities within the MOF may be tailored in a way that at least parts of the hydrocarbon molecules (that undergo a catalysed reaction) may reach (contact) the catalytically active sites. Besides hosting one or more catalytically active sites within the MOF lattice, additional functional groups may be added to one or more of the nodes and/or to one or more of the linkers, the additional functional groups also take part in the catalytical process. Preferably, the MOF composition comprises a well-defined pore structure (tailored for the present use-case), and allows diffusion of hydrocarbons.

In a preferred embodiment of the method according to the invention, the molar proportion of olefinic hydrocarbons among all hydrocarbons of the intermediate product stream is at least 50 percent. Preferably, the molar proportion of olefinic hydrocarbons among all hydrocarbons of the intermediate product stream as effluent from the prereactor stage is at least 80 percent. Further preferably, the molar ratio of olefinic hydrocarbons over paraffinic hydrocarbons of the intermediate product stream as effluent from the prereactor stage is at least 60 %, in particular at least 85 %. Concerning the composition of the intermediate product stream as effluent from the prereactor stage, it is preferred that the respective hydrocarbons of the given carbon atom number have the following proportion among all carbon atoms in the intermediate product stream:
C2 hydrocarbons: between 10 % and 40 % and/or
C3 hydrocarbons: between 30 % and 45 % and/or
C4 hydrocarbons: between 10 % and 30 % and/or
C5 hydrocarbons: between 5 % and 15 % and/or
C6 and higher hydrocarbons: less than 5 %.

With respect to the composition of the intermediate product stream as feed to the main reactor stage, preferably including any recycled streams, it is preferred that the respective hydrocarbons of the given carbon atom number have the following proportion among all carbon atoms in the intermediate product stream:
C2 hydrocarbons: between 10 % and 50 % and/or
C3 hydrocarbons: between 15 % and 45 % and/or
C4 hydrocarbons: between 15 % and 33 % and/or
C5 hydrocarbons: between 5 % and 15 % and/or
C6 hydrocarbons: between 5 % and 15 % and/or
C7 hydrocarbons: between 5 % and 15 % and/or
C8 hydrocarbons: between 5 % and 15 % and/or
C9 hydrocarbons: less than 5 % and/or
C10 hydrocarbons: less than 2 % and/or
C11 hydrocarbons: less than 2 % and/or
C12 hydrocarbons: less than 1 % and/or
C13 hydrocarbons: less than 1 % and/or
C14 hydrocarbons: less than 1 % and/or
C15 hydrocarbons: less than 1 % and/or
C16 hydrocarbons: less than 1 % and/or
C17 hydrocarbons: less than 1 % and/or
C18 and higher hydrocarbons: less than 1 %.

In a further preferred embodiment of the method according to the invention, from the main product stream at least one transport fuel stream is obtained. This at least one transport fuel stream preferably comprises the transport fuel. Preferably, the main product stream is at least partially fed to a fractionator stage in which at least one transport fuel stream is obtained from the main product stream. It is further preferred that the weight proportion of the C10 to C16 hydrocarbons among all hydrocarbons of the at least one transport fuel stream is at least 35 percent. In other words, this weight proportion relates to the combination of all transport fuel streams of the at least one transport fuel stream. In particular, it may be that the weight proportion of the C10 to C16 hydrocarbons among all hydrocarbons of the at least one transport fuel stream is at least 50 percent.

With respect to the composition of the at least one transport fuel stream as effluent, preferably in combination, from the main reactor stage, preferably including any recycled streams, it is preferred that the respective hydrocarbons of the given carbon atom number have the following proportion among all carbon atoms in the at least one transport fuel stream:
C2 hydrocarbons: between 0.1 % and 15 % and/or
C3 hydrocarbons: between 0.1 % and 15 % and/or
C4 hydrocarbons: between 1 % and 15 % and/or
C5 hydrocarbons: between 3 % and 15 % and/or
C6 hydrocarbons: between 5 % and 20 % and/or
C7 hydrocarbons: between 5 % and 20 % and/or
C8 hydrocarbons: between 5 % and 20 % and/or
C9 hydrocarbons: between 2 % and 15 % and/or
C10 hydrocarbons: between 2 % and 15 % and/or
C11 hydrocarbons: between 2 % and 15 % and/or
C12 hydrocarbons: between 2 % and 15 % and/or
C13 hydrocarbons: between 2 % and 15 % and/or
C14 hydrocarbons: between 2 % and 15 % and/or
C15 hydrocarbons: between 1 % and 15 % and/or
C16 hydrocarbons: less than 3 % and/or
C17 hydrocarbons: less than 2 % and/or
C18 and higher hydrocarbons: less than 8 %.

A preferred embodiment of the method according to the invention is characterized in that the at least one transport fuel stream comprises a jet fuel stream, in particular a hydrogenated jet fuel stream, and/or a jet fuel precursor stream and/or a diesel stream and/or a gasoline stream. The at least one transport fuel stream may also comprise a liquified petroleum gas stream.

In principle, the jet fuel stream and/or the hydrogenated jet fuel stream may comprise jet fuel to an arbitrary amount. In particular, it may be that the jet fuel stream and/or the hydrogenated jet fuel stream primarily comprises jet fuel. Thus, at least 50 % of the jet fuel stream and/or the hydrogenated jet fuel stream by weight would consist of jet fuel. It may even be that the jet fuel stream and/or the hydrogenated jet fuel stream substantially consists of jet fuel. Here and in the following, jet fuel may be defined according to ASTM specification D1655. Further still, jet fuel may be defined to consist mainly of C₁₀-C₁₆ hydrocarbon compounds with the following composition, with the percentages referring to weight proportions: Paraffins, in particular n-paraffins, iso-paraffins, cyclo-paraffins: 70 % to 85 %, aromatics: less than 25 %, olefins: less than 5 %, S, N, O containing compounds: less than 5 %. In other words, with reference to the meaning of "consist mainly", it may be that at least 50 %, preferably at least 75 %, in particular at least 90 %, of the jet fuel consists of C₁₀-C₁₆ hydrocarbon compounds with the properties just given.

A jet fuel precursor stream is a stream of a transport fuel that does not necessarily meet the criteria for jet fuel, but can be converted to jet fuel by hydrotreatment, for example in a hydrogenation stage. Preferably, the jet fuel precursor stream may be defined to consist mainly of C₁₀-C₁₆ hydrocarbon compounds with the following composition, with the percentages referring to weight proportions: Paraffins: less than 20 %, olefins: at least 80 %, aromatics: less than 25 %, S, N, O containing compounds: less than 5 %. In other words with reference to "consist mainly", it may be that at least 50 %, preferably at least 75 %, in particular at least 90 %, of the jet fuel precursor stream consists of C₁₀-C₁₆ hydrocarbon compounds with the properties just given.

A further preferred embodiment of the method according to the invention is characterized in that at least one recycle stream is obtained from the fractionator stage and recycled to the main reactor stage. Preferably, the at least one recycle stream comprises a liquid recycle stream recycled to the main reactor stage with a pressure drop from the fractionator stage to the main reactor stage. In other words, the pressure of the liquid recycle stream as it exits the fractionator stage is higher than the pressure of the liquid recycle stream as it enters the main reactor stage.

In principle, the main reactor stage may comprise any kind of suitable main reactor. In particular, the main reactor stage may comprise a 3-phase main reactor. The main reactor stage may comprise a main reactor which is a trickle bed reactor, in particular a isothermal tubular trickle bed reactor, a slurry-phase reactor, a bubble flow reactor, in particular a 2-phase packed bed bubble flow reactor, a fixed bed reactor or a tubular fixed bed reactor. The main reactor preferably has a main reactor pressure between 2 bara and 200 bara, in particular between 10 bara and 120 bara. The main reactor may also have a main reactor pressure between 20 bara and 70 bara. It is preferred that the main reactor has a main reactor temperature between 20° C and 250° C, further preferably between 20° C and 100° C. The main reactor may also have a main reactor temperature between 30° C and 70° C.

In a preferred embodiment of the method according to the invention, the fractionator stage comprises a depropanizer distillation column for separating the main product stream into a liquid main product stream and a gaseous stream and that the gaseous stream is at least partially recycled to the main reactor stage. It is preferred that the depropanizer distillation column is operated at elevated pressure. Preferably the depropanizer distillation column is operated at a pressure which is at least 50 % of the pressure of the main reactor stage, preferably at least 50 % of the pressure of the main reactor. Alternatively or in addition, it may be that the depropanizer distillation column is operated at a pressure lower than the pressure of the main reactor stage, in particular lower than the pressure of the main reactor. Preferably, the pressure of the recycled gaseous stream is increased by a recycle gas blower. In other words, it is preferred that the pressure of that part of the gaseous stream which is recycled to the main reactor stage is increased by the recycle gas blower. In particular, it may be that recycle gas blower is a single stage recycle gas blower.

In a further preferred embodiment of the method according to the invention, the molar proportion of olefinic C10 to C16 hydrocarbons among all C10 to C16 hydrocarbons of at least one of the at least one transport fuel streams is at least 60 percent. Preferably, the at least one of the at least one transport fuel streams comprises the jet fuel precursor stream or consists of the jet fuel precursor stream. It may also be that the molar proportion of olefinic C10 to C16 hydrocarbons among all C10 to C16 hydrocarbons of at least one of the at least one transport fuel streams is at least 90 percent.

A preferred embodiment of the method according to the invention is characterized in that at least one of the transport fuel streams, preferably the jet fuel precursor stream, is at least partially fed to a hydrogenation stage from which a hydrogenated transport fuel stream, in particular the hydrogenated jet fuel stream, is obtained. It is further preferred that a molar proportion of paraffinic C10 to C16 hydrocarbons among all C10 to C16 hydrocarbons of the hydrogenated jet fuel stream is at least 70 percent. It is further preferred that a molar proportion of olefinic C10 to C16 hydrocarbons among all C10 to C16 hydrocarbons of the hydrogenated jet fuel stream is at most 20 percent. It may also be that a molar proportion of olefinic C10 to C16 hydrocarbons among all C10 to C16 hydrocarbons of the hydrogenated jet fuel stream is at most 5 percent.

With respect to the composition of the jet fuel stream, in particular the hydrogenated jet fuel stream, it is preferred that the respective hydrocarbons of the given carbon atom number have the following proportion among all carbon atoms in the jet fuel stream or hydrogenated jet fuel stream, respectively:
Sum of C2 to C6 hydrocarbons: less than 1 % and/or
C7 hydrocarbons: less than 1 % and/or
C8 hydrocarbons: between 1 % and 6 % and/or
C9 hydrocarbons: between 4 % and 15 % and/or
C10 hydrocarbons: between 10 % and 20 % and/or
C11 hydrocarbons: between 10 % and 30 % and/or
C12 hydrocarbons: between 10 % and 30 % and/or
C13 hydrocarbons: between 10 % and 30 % and/or
C14 hydrocarbons: between 10 % and 30 % and/or
C15 hydrocarbons: between 3 % and 15 % and/or
C16 hydrocarbons: between 1 % and 5 % and/or
C17 hydrocarbons: less than 2 % and/or
C18 and higher hydrocarbons: less than 0.5 %.

A further preferred embodiment of the method according to the invention is characterized in that the reactant is methanol or dimethyl ether. The dimethyl ether may in principle be obtained in an arbitrary way. If the reactant is dimethyl ether, it is preferred that the dimethyl ether is derived from methanol. Methanol and dimethyl ether are advantageous in particular because they may be produced at a distance to the conversion of the methanol or dimethyl ether, respectively, to transport fuel according to the invention. In other words, the production route from feedstock to transport fuel may be separated by location. Moreover, methanol may be produced in a carbon-efficient or carbon-neutral way.

If the reactant is methanol, the methanol may in principle be obtained in an arbitrary way. In a preferred embodiment of the method according to the invention, the methanol is obtained by synthesis from a synthesis gas comprising hydrogen and at least one of carbon monoxide and carbon dioxide. The synthesis gas may in particular comprise carbon monoxide and carbon dioxide. The carbon dioxide of the synthesis gas may in principle be obtained from an arbitrary source. It is preferred, that the carbon dioxide is obtained from ambient atmosphere by direct air capture (DAC). In this way, any carbon dioxide released by the combustion of the transport fuel has been removed from the atmosphere previously. Alternatively or in addition, the carbon dioxide may be obtained from the combustion of biomass. In this case also the carbon dioxide is obtained after having been previously removed from the atmosphere. In particular, the carbon dioxide may be obtained from a combined heat and power plant.

It is preferred that the hydrogen is obtained from water by electrolysis. This electrolysis may be in particular powered by electricity from renewable energy. The carbon emissions associated to the generation of such renewable energy are small or even nil. Thus, net carbon dioxide emissions even for the production of the transport fuel may be reduced or eliminated.

In a further preferred embodiment of the method according to the invention, the synthesis gas is obtained from the gasification of biomass. This way of producing synthesis gas is accepted as carbon-neutral because the carbon contained in the biomass is extracted from the atmosphere during the growth of the plants, the material of which is contained in the biomass.

In principle, any suitable catalyst may be used for the catalytic conversion in the prereactor stage. A preferred embodiment of the method according to the invention is characterized in that for the catalytic conversion in the prereactor stage a silico-alumino-phosphate molecular sieve catalyst, preferably a SAPO-34-catalyst, or a zeolite catalyst, in particular a zeolite catalyst of the ZSM-5 type, is used.

A further preferred embodiment of the method according to the invention is characterized in that the prereactor stage comprises a prereactor device for catalytic conversion of the reactant and a quench column, from which quench column the intermediate product stream is obtained as a gas fraction. It is further preferred, that a liquid fraction with carbon hydrates is obtained from the quench column. It may be that the liquid fraction is fed to the main reactor stage and/or to the fractionator.

A preferred embodiment of the method according to the invention is characterized in that the metal organic framework (MOF) catalyst comprises a MOF lattice and a catalytically active site hosted in the MOF lattice, wherein the MOF lattice comprises a number of nodes and a number of linkers interconnecting the nodes, wherein the catalytically active site comprises a structure of formula (1): 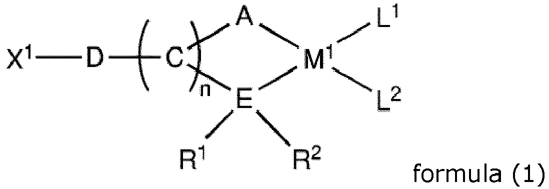 wherein in the structure of formula (1):
- M¹ is a transition metal;
- L¹ and/or L² are independently selected from: H, an alkyl group, an aryl group, an olefin, an organic group comprising a hetero-atom such as oxygen or nitrogen, CO, NO, NO₂, CO₂, a halogen atom, or wherein formula (1) does not comprise L¹ and/or L²;
- E is selected from P, N, As, O, S, Bi;
- R¹ is selected from H, P, an alkyl group, an aryl group, or wherein formula (1) does not comprise R¹;
- R² is selected from R¹;
- A is selected from O, N, S, a carboxylate group, an alcoholate group, a sulfide group, a sulfonate group, a phosphate group, an ester group, an amine group, an imine group, a pyridine group, ER¹R², or L¹;
- Cₙ relates to a carbon chain with a number of n carbon atoms, wherein n = 1 - 5;
- D is an aliphatic group or aryl group, wherein D is bound to one or more of the carbon atoms of Cₙ;
- X¹ is selected from a carboxylic acid group, sulfonic acid group, a carboxylate group, a sulfonate group, a carbonyl group, a hydroxyl group, a hydroxylate group, an amino group, an ammonium group, a phosphino group, a phosphonium group, a pyridine group, a pyridine derivative, an imidazole group, an imidazole derivative, an imidazolate group, a phosphonate group, a phosphonate derivative, a nitrile group, a boronic acid group, a boronic acid ester group, a triazole group, a triazolate group, a tetrazole group, a tetrazolate group or wherein formula (1) does not comprise X¹,
wherein the catalytically active site is bound or coordinated to the MOF lattice, wherein the catalytically active site is preferably bound or coordinated to the MOF lattice via X¹.

All mentioned groups may also refer to derivates of said groups, each comprising additional functional groups.

The term "aryl group" refers to an aromatic moiety. An "alkyl" group in the context of the present invention, for example and if not mentioned differently, refers to a linear or branched hydrocarbon which is saturated, it comprises only single bonds between adjacent carbon atoms. Preferably, an alkyl group according to the present invention may be selected from methyl, ethyl, n-propyl, isopropyl, n-butyl, sec-butyl, tert-butyl, n-pentyl, 1-methylbutyl, 2-methylbutyl, 3-methylbutyl, neopentyl, 1-ethylpropyl, cyclohexyl, cyclopentyl, n-hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl or 1-methyl-2-ethylpropyl.

An "alcoholate" group may refer to an alkoxy group, which may according to the invention be selected from methoxy, ethoxy, n-propoxy, isopropoxy, n-butoxy, sec-butoxy, tert-butoxy, n-pentoxy, 1-methylbutoxy, 2-methylbutoxy, 3-methylbutoxy, neopentoxy, 1-ethylpropoxy, cyclohexoxy, cyclopentoxy, n-hexoxy, 1,1-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-methyl-2-ethylpropoxy.

The term "olefin" refers to unsaturated hydrocarbons, comprising one or more double or triple bonds between adjacent carbon atoms. A "halogen" atom in the context of the invention, if not mentioned differently, refers to fluorine (F), chlorine (CI), bromine (Br), iodine (I), or astatine (At). In case that formula (1) does not comprise L¹ and/or L², this is independent from other structural parts of formula (1). So, if L¹ and/or L² are not present in formula (1), the latter may still comprise R¹, R², A, M¹, E, Cn, D and X¹. The same applies to R¹ and X¹.

According to a further embodiment of a MOF according to the present invention, the catalytically active site is bound or coordinated to the MOF lattice, wherein the catalytically active site is preferably bound or coordinated to the MOF lattice via X¹. In case that the catalytically active site is "bound" to the MOF lattice, a chemical bonding is provided between parts of the catalytically active site and the MOF, e. g. a single-bond, double-bond, triple-bond. In case that the catalytically active site is coordinated to the MOF lattice, the "coordination" refers to a coordinate covalent bond, which is synonymously known as dative bond, dipolar bond or coordinate bond. Such a bond may be formed in the case that in an electron pair bond, the bonding electrons originate from only one of the two bonding partners. A molecule or ion with a lack of electrons is called acceptor (= Lewis acid), the one with free electrons is called donor (= Lewis base). Alternatively, the catalytically active site may be bound or coordinated to the node.

Transition metals are to be understood as elements of groups 4 - 11 of the periodic table of elements. In current praxis also f-block elements (lanthanide and actinide) series) are considered as "transition metals", in particular as "inner transition metals". According to a further embodiment of a MOF according to the present invention, M¹ is selected from Ni, Pd, Pt, Co, Fe, Ru, Rh, Ir, Os, W wherein M¹ preferably is Ni. Nickel is of advantage due to its relatively low price when compared to other transition materials. Nickel is also of advantage in terms of the achievable catalytical activity (with respect to the mentioned conversion of the first hydrocarbon composition to the second hydrocarbon composition).

In a preferred embodiment of the method according to the invention,
a) regarding L¹ and/or L²,
   - the organic group comprising oxygen as hetero-atom is selected from THF, an alcohol group, an alcoholate group or an acetylacetonate group,
   - the organic group comprising a nitrogen as hetero-atom is selected from an amine group, an imine group, an amide group or a nitrile group,
   - the halogen atom is CI, Br, or I; and/or
b) A preferably is a carboxylate or an alcoholate; and/or
c) Cₙ is C₂.

All the mentioned components selected from THF (tetrahydrofuran; 1,4-Epoxybutane), the alcohol group, the alcoholate (alkoxy) and acetylacetonate group may comprise one or more oxygen atoms, which may each act as binding/coordination partner with M¹. All the mentioned components selected from an amine group, an imine group, an amide group or a nitrile group may comprise one or more nitrogen atoms, which may each act as binding/coordination partner with M¹. According to a further embodiment of a MOF according to the present invention, A preferably is a carboxylate or an alcoholate. Said carboxylate or alcoholate representing A, may comprise one or more carboxylate- or alcoholate groups.

According to a further embodiment of a MOF according to the present invention, Cₙ is C₂. In this case an alkyl chain of two carbon atoms forms Cₙ. Also, higher numbers of n may be suitable, for instance n = 1, 2, 3, 4, 5, 6, 7, 8, 9, 10.

In a further preferred embodiment of the method according to the invention,
a) the nodes of the MOF are independently defined by a structure of M²_{w}L³_{z}, wherein
   - M² refers to one or more atoms of an element, wherein the element preferably is a metal, a semi-metal, an alkali metal, or an earth alkali metal,
   - w = 1 - 24,
   - L³ refers to a ligand binding or coordinating to M² via O, N, S, P, C, CI, Br, I,
   - z = 0 - 24; and/or
b) the linkers of the MOF are independently defined by a structure of R³ₓX²_{y}, wherein
   - R³ refers to a structure comprising a number of m = 2 - 50 C atoms, wherein the structure comprises one or more functional groups selected from an amino group, an imido group, an amido group, a cyano group, a nitro group, an aldehyde group, a urea group, a thiourea group, an ester group, a carbonate group, an alcohol group, an ether group, a halogen, a phosphine derivative, a phosphine oxide derivative, an imidazolium group, a pyridino group, a triazole group, an imidazole group, a phosphate group, a sulfonic acid group, a sulfonate group, an enolate group, an imine group, a phenantroline group or combinations thereof, or wherein the structure does not comprise any of said functional groups,
   - X² is selected from a carboxylic acid group, a sulfonic acid group, a carboxylate group, a sulfonate group, a carbonyl group, a hydroxyl group, a hydroxylate group, an amino group, an ammonium group, a phosphino group, a phosphonium group, a pyridine group, a pyridine derivative, an imidazole group, an imidazole derivative, an imidazolate group, a phosphonate group, a phosphonate derivative, a nitrile group, a boronic acid group, an ester group, a triazole group, a triazolate group, a tetrazole group, a tetrazolate group,
   - x = 1 - 8;
   - y = 1 - 8.

In the structure M²_{w}L³_{z} one or more ligands L³ of the same or different type (structure) may be present. For example, M²_{w}L³_{z} may be selected from: Zn₄(CO₂)₆; M₃O(CO₂)₆ with M = Zn, Cr, In or Ga; M₂(CO₂)₄ with M = Cu, Zn, Fe, Mo, Cr, Co, or Ru; Zr₆O₄(OH)₄-(CO₂)₁₂; Zr₆O₈(CO₂)₈; Zn₃(H₂O)₃(CO₂)₆; Zn₄O(CO₂)₈; Zn₇(OH)₂-(CO₂)₁₂;Co₂(OH)(CO₂)₅-(C₅H₅N)₃; Al(OH)(CO₂)₂: VO(CO₂)₂; Mn(CO₂)₂; M₃O₃(CO₂)₃ with M = Zn, Mg, Co, Ni, Mn, or Fe; Mn₃(CO₂)₈; Zn(C₃H₃N₂)₄; Ag₃(OH)(H₂O)₂(C₃H₃N₂)₆; Fe(C₂O₂)₂(H₂O)₂; Zn(C₂O₂)₃; In(C₅HO₄N₂)₄; Cu(CO₂)₂(C₄H₄N₂)-(C₆H₂O₄N₂); Ni(C₈H₂₀N₄)O₂; Cd₂Cl₆(C₅H₅N)₄; Mn₄Cl(CHN₄)₈; Cu₄Cl(C₂H₂N₃)₈; M(C₅H₅N)₄ with M = Cu or Cd; Zn(CO₂)₄(NH₂)₂; Na(OH)₂(SO₃)₃; La(PO₃)₄(PO₃H)(H₂O)₃; Cu₂(CNS)₄; CuS₃; Zn₃(CO₂)₆(C₅H₅N)₂; Ni₄(C₃H₃N₂)₈; Zr₆(µ₃-O)₄(µ₃-OH)₄(CO₂)₁₂; Zr₆(µ₃-O)₄(µ₃-OH)₄(CO₂)₁₀(AcO)₂; Zr₆(µ₃-OH)₈(OH)₄(CO₂)₈; Zr₆(µ₃-O)₄(µ₃-OH)₄(OH)₄(H₂O)₄(CO₂)₈; Zr₆(µ₃-O)₄(µ₃-OH)₄(OH)₆(H₂O)₆(CO₂)₆; Zr₆(µ₃-OH)₈(-OH)₈(CO₂)₈; [Zr₆(µ₃-O)₄(µ₃-OH)₄(OH)₄(H₂O)₄]⁸⁺.

Preferably all or some of the nodes of the MOF lattice have a structure M²_{w}L³_{z} as given above.

Preferably all or some of the linkers of the MOF lattice have a structure R³ₓX²_{y} as given above.

According to an exemplary first selection, the linkers may be - according to an embodiment of the invention - selected from one of the following linkers:

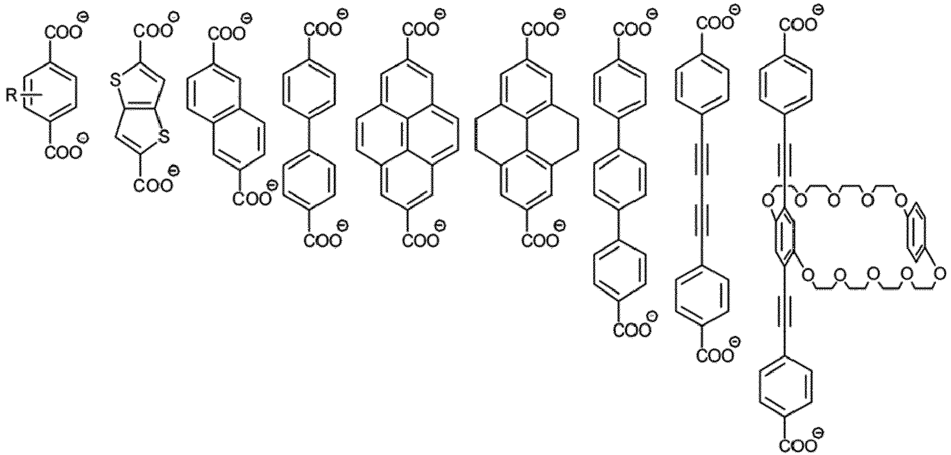

According to an exemplary second selection, the linkers may be - according to an embodiment of the invention - selected from one of the following linkers:

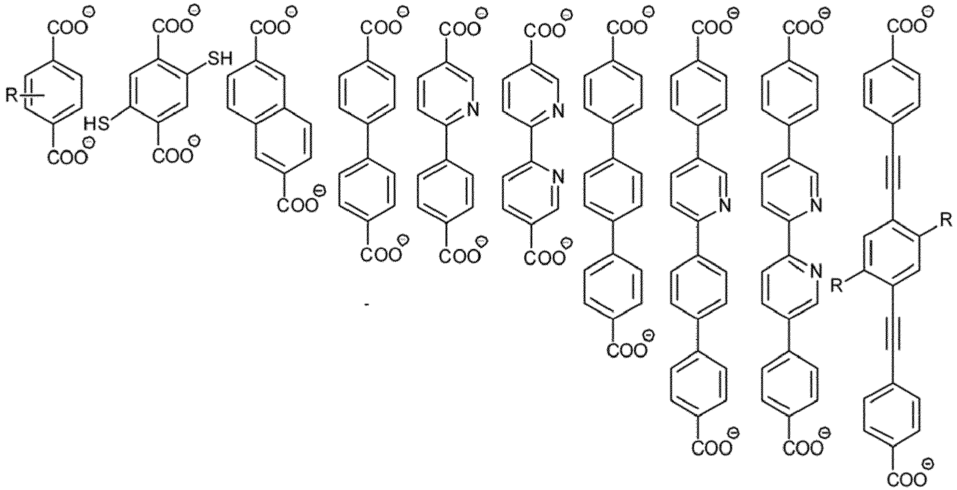

According to an exemplary further selection, the linkers may be - according to an embodiment of the invention - selected from one of the following linkers:

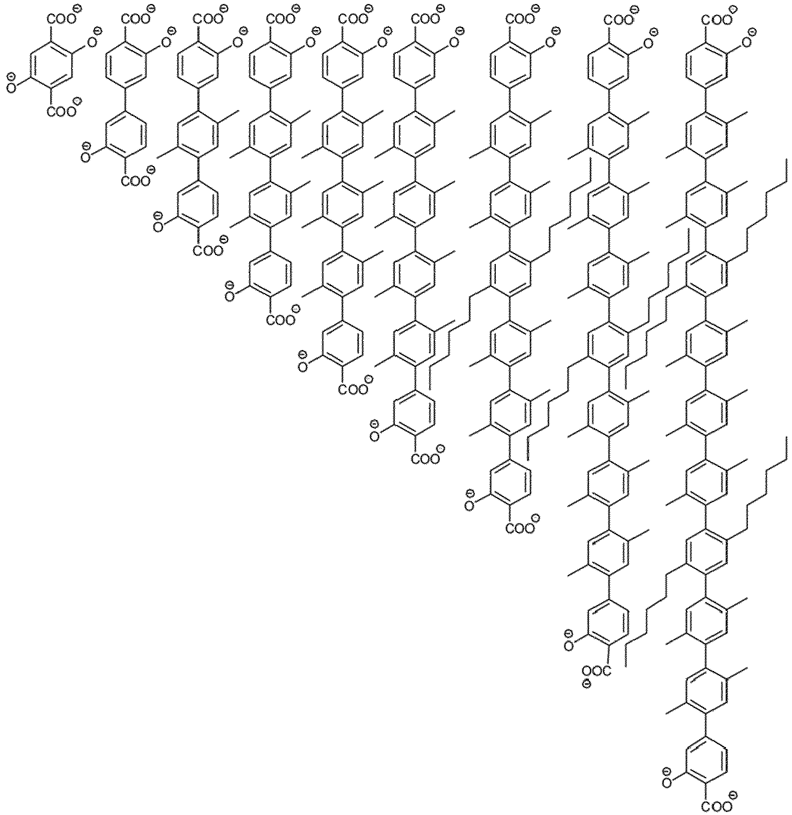

According to an exemplary further selection, the linkers may be - according to an embodiment of the invention - selected from one of the following linkers:

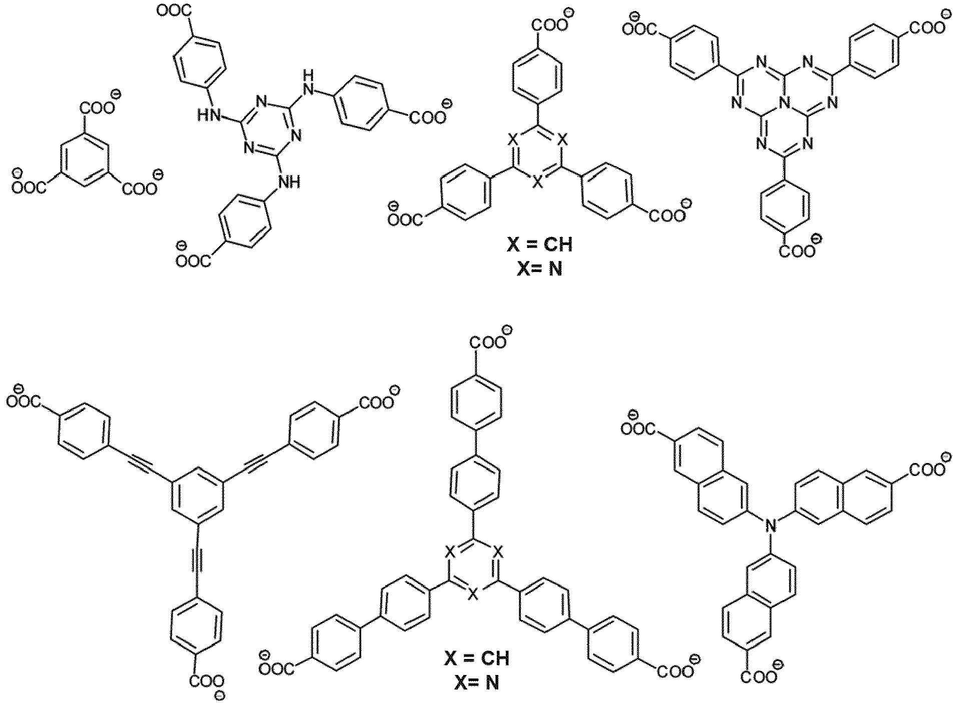

According to an exemplary further selection, the linkers may be - according to an embodiment of the invention - selected from one of the following linkers:

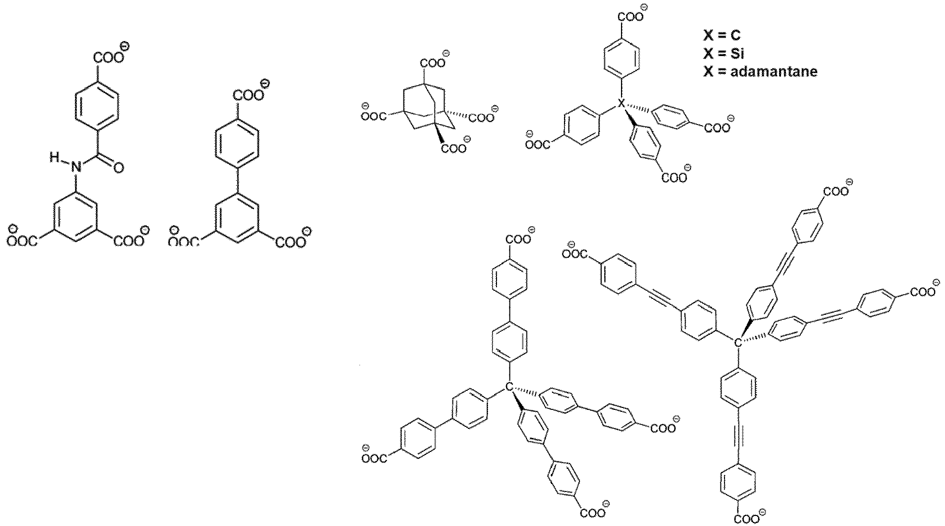

According to an exemplary further selection, the linkers may be - according to an embodiment of the invention - selected from one of the following linkers:

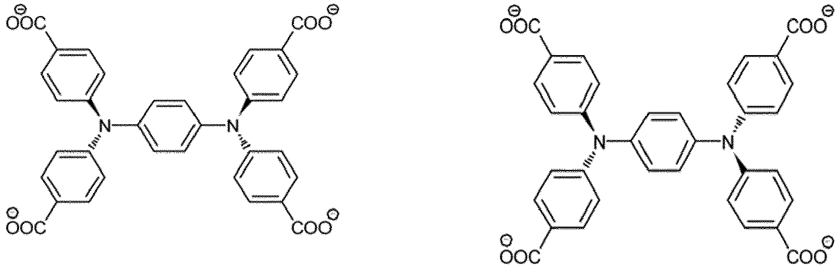

According to an exemplary further selection, the linkers may be - according to an embodiment of the invention - selected from one of the following linkers:

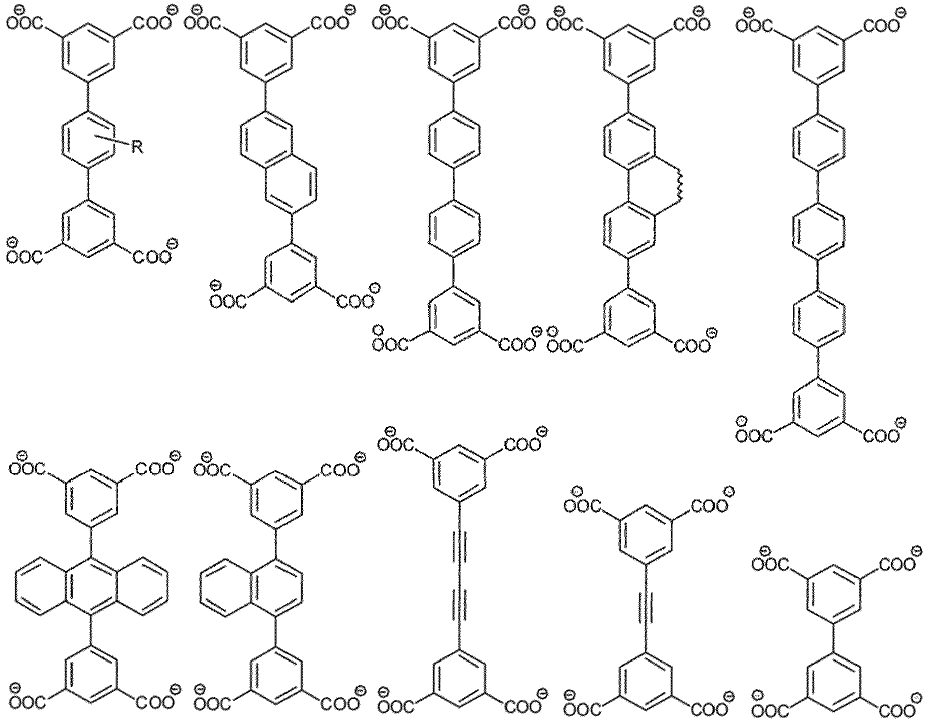

According to an exemplary further selection, the linkers may be - according to an embodiment of the invention - selected from one of the following linkers:

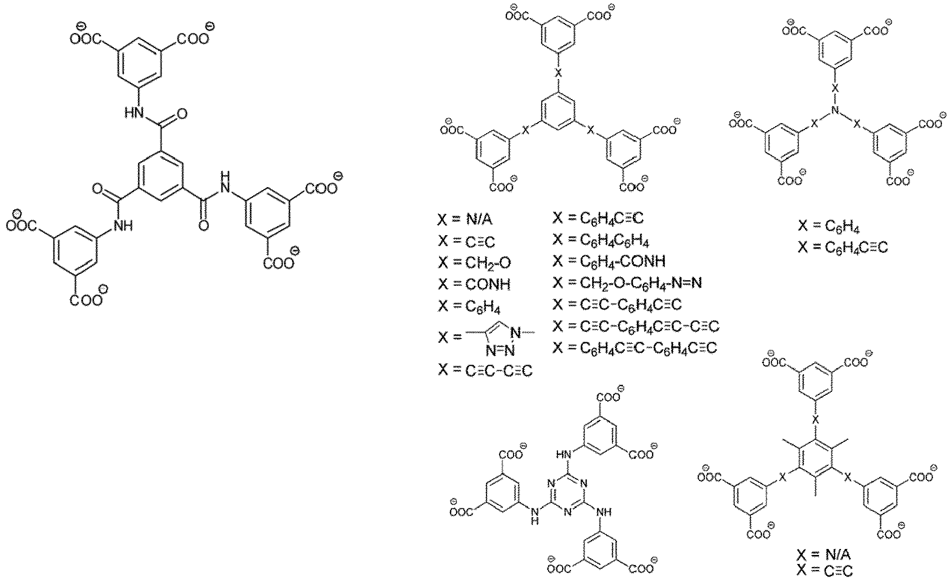

According to an exemplary further selection, the linkers may be - according to an embodiment of the invention - selected from one of the following linkers:

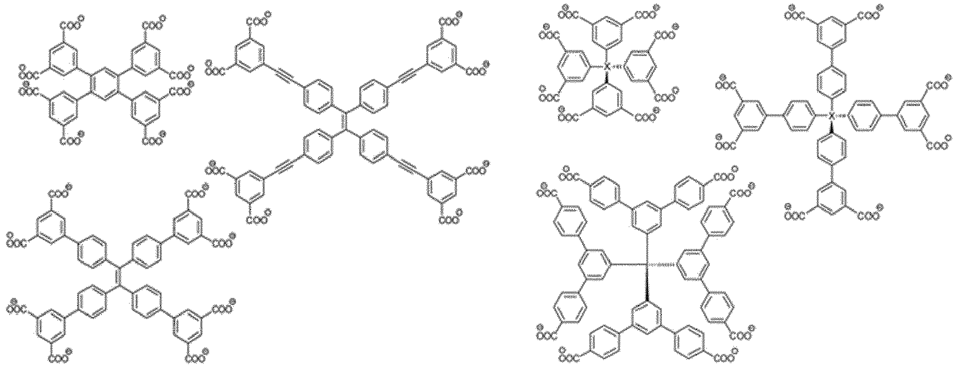

According to an exemplary further selection, the linkers may be - according to an embodiment of the invention - selected from one of the following linkers:

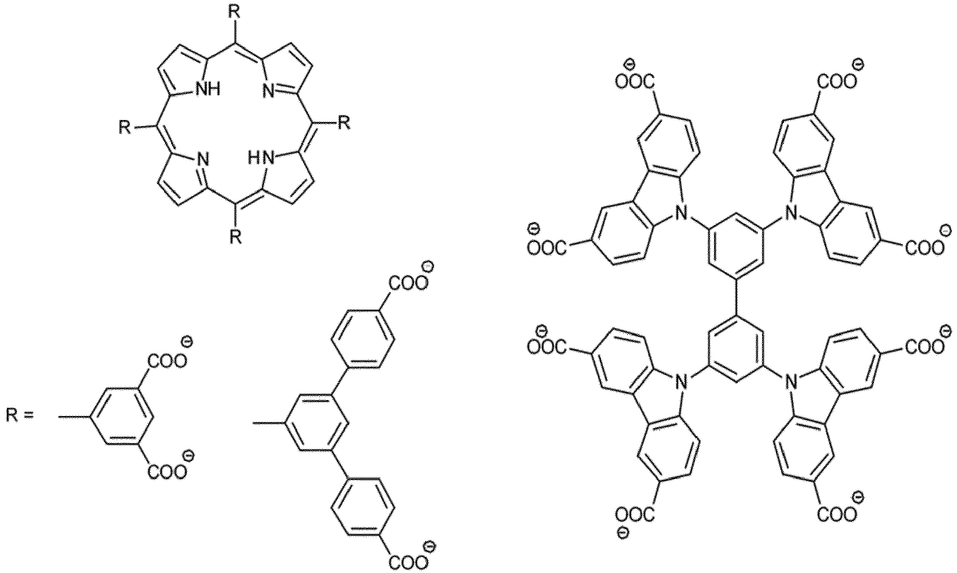

According to an exemplary further selection, the linkers may be - according to an embodiment of the invention - selected from one of the following linkers:

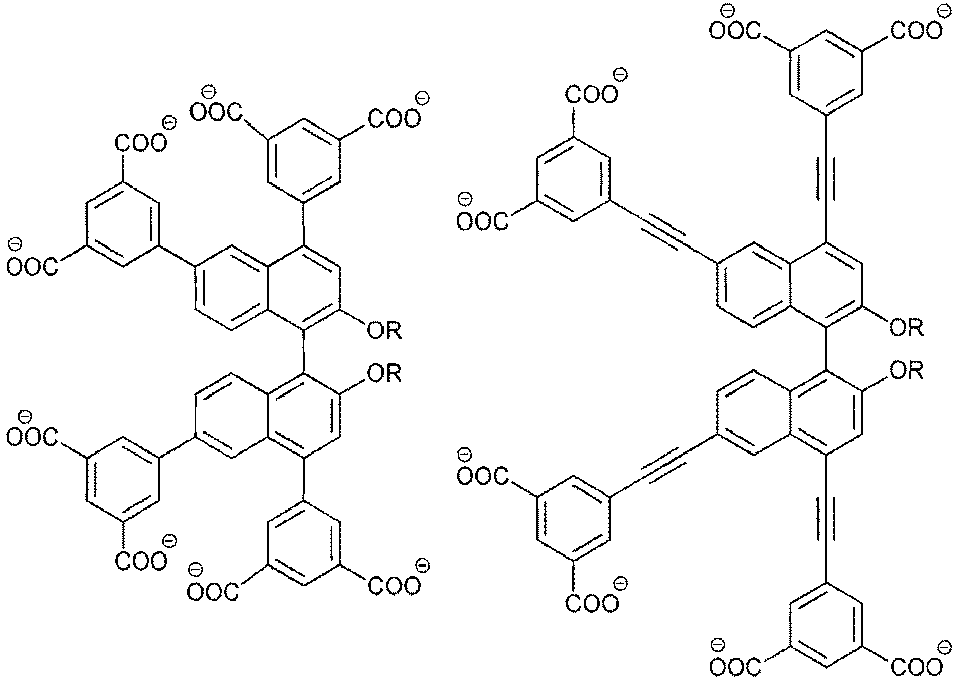

According to an exemplary further selection, the linkers may be - according to an embodiment of the invention - selected from one of the following linkers:

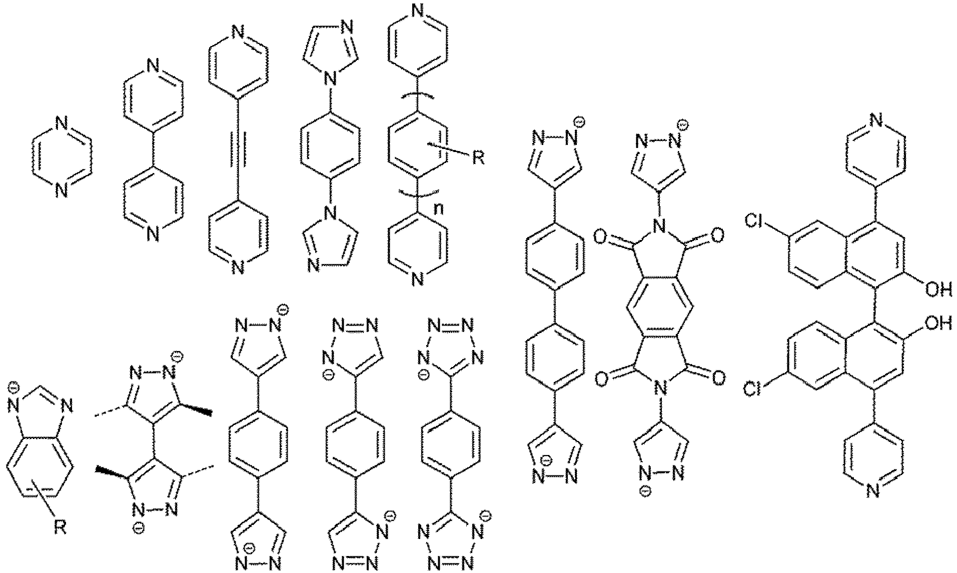

According to an exemplary further selection, the linkers may be - according to an embodiment of the invention - selected from one of the following linkers:

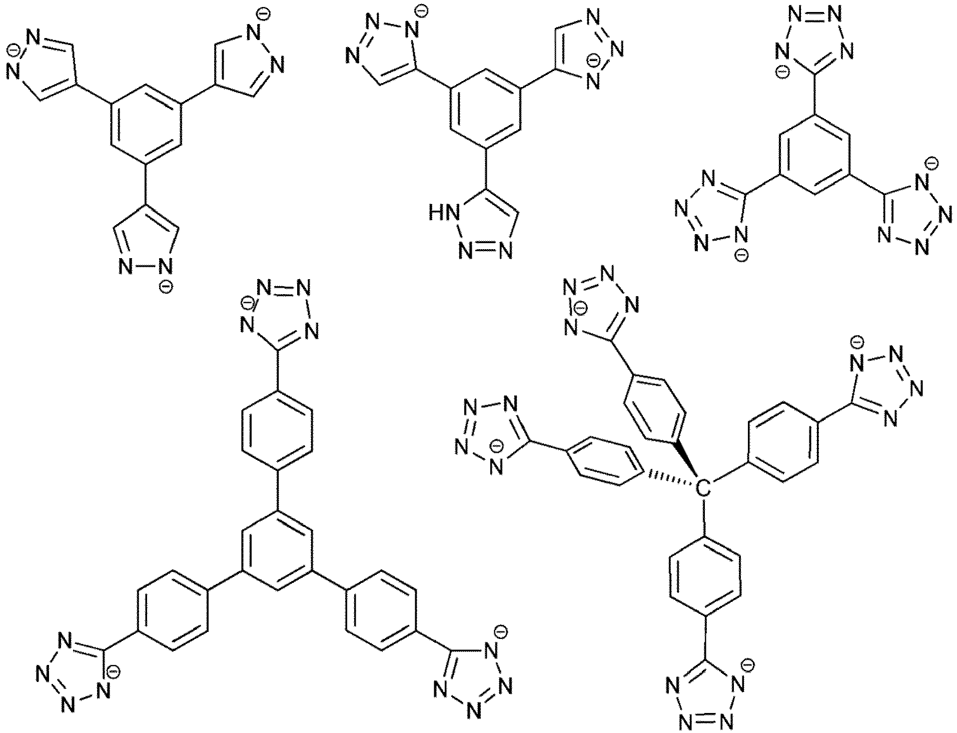

According to an exemplary further selection, the linkers may be - according to an embodiment of the invention - selected from one of the following linkers:

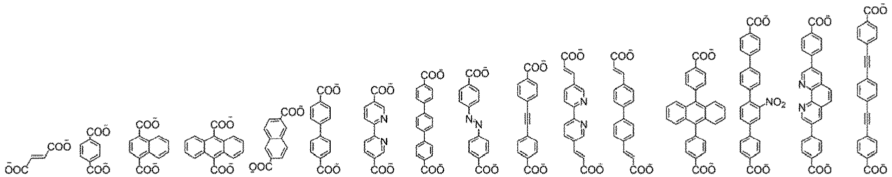

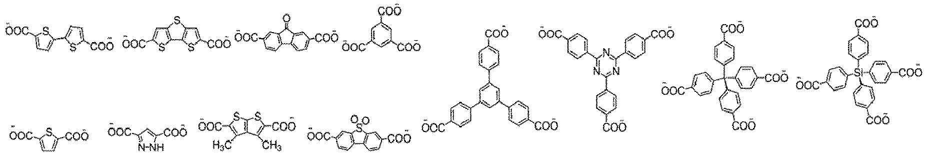

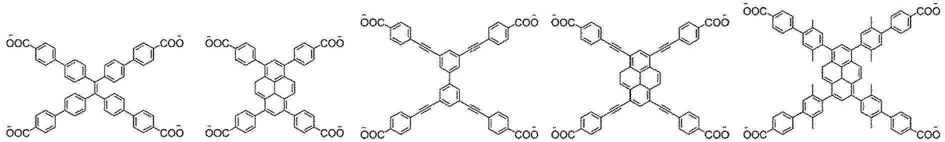

According to an exemplary further selection, the linkers may be - according to an embodiment of the invention - selected from one of the following linkers:

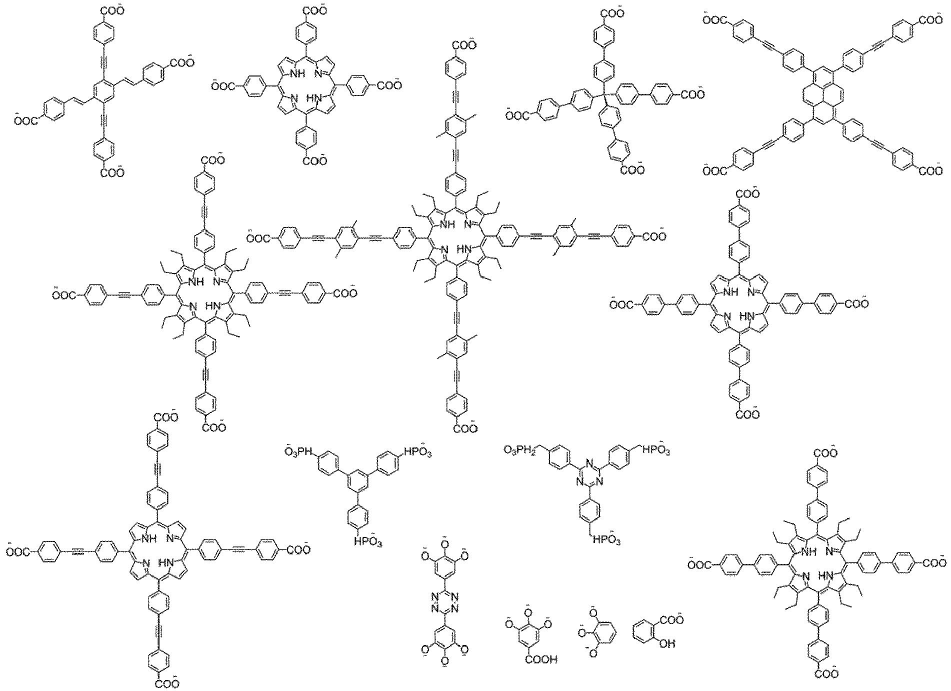

According to an embodiment of the present invention, the number of nodes and the number of linkers define a three-dimensional porous network, wherein each linker independently interconnects two or more nodes. By varying the structure of the linkers and/or the nodes, the porosity, pore-sizes and structure of the MOF lattice - and thus also the take-up capabilities for catalytically active sites and/or reaction educts/products - may be tailored.

In a preferred embodiment, the MOF lattice according the invention is provided by a NU-1000 metal organic framework. The NU-1000 MOF comprises 1,3,6,8-Tetra (4-carboxylphenyl) pyrene as linkers and [Zr₆(µ₃-O)₄(µ₃-OH)₄(OH)₄(H₂O)₄]⁸⁺ as nodes. The catalytically active site may bind or coordinate to the linker (e.g. to the pyrene fragment or carboxyl groups of the linker. Alternatively, the catalytically active site may bind or coordinate to the Zr metal or any fragment of the [Zr₆(µ₃-O)₄(µ₃-OH)₄(OH)₄(H₂O)₄]⁸⁺ node.

The MOF composition described above may be prepared comprising the steps of:
a) Providing a MOF lattice
b) Introducing a catalytically active site into the MOF lattice.

According to an embodiment of preparing a MOF composition, step a) comprises interconnecting a number of nodes with a number of linkers to form the MOF lattice. Interconnecting the nodes and the linkers is preferably carried-out via chemical reaction(s). The interconnection between nodes and linkers may be carried out by way of a self-assembly reaction or by providing parts of the desired MOF lattice and connecting these parts at desired positions. Also, a full synthesis comprising a number of steps to form the MOF lattice may be understood as "providing" the MOF lattice. It should be noted that "providing the MOF lattice" may also be understood as "purchasing a commercially available MOF lattice from a manufacturer" or as "placing a component comprising the MOF lattice inside a reactor or reaction flask". Providing a MOF lattice may also be understood in a sense of dissolving/suspending the MOF lattice in a suitable solvent.

Introducing a catalytically active site into the MOF lattice may be understood as trapping one or more catalytically active sites in pores and/or cavities of the MOF lattice. Introducing a catalytically active site into the MOF lattice may also be understood as binding and/or coordinating one or more catalytically active sites to nodes and/or linkers of the MOF lattice. It may be the case, that a catalytically active site may both bind and coordinate to a node and/or linker of the MOF lattice via different components (atoms, functional groups) of the catalytically active site. The catalytically active site may be introduced into the MOF lattice in a one- or more (e.g. two) step procedure, for example via first introducing a precursor into the MOF lattice (the precursor may bind or coordinate to one or more of the nodes/linkers of the MOF lattice) and second introducing an additional catalytically active compound, which binds/coordinates or otherwise interacts with the precursor.

According to a further embodiment of preparing a MOF composition, step b) is carried out by an impregnation technique, preferably via an incipient wetness technique. Incipient wetness techniques, also called capillary impregnation or dry impregnation, is a commonly used technique for the synthesis of heterogeneous catalysts. Typically, the active metal precursor (of the catalytically active site) is dissolved in an aqueous solution or an organic solvent. Then the metal-containing solution is added to a catalyst support (e.g. the MOF lattice), which preferably contains the same pore volume as the volume of the solution that was added. Capillary action draws the solution into the pores. Solution added in excess to the support pore volume causes the solution transport to change from a capillary action process to a diffusion process, which is much slower. The formed MOF catalyst can then be dried and calcined to drive off the volatile components within the solution, depositing the metal on the catalyst surface. The maximum loading is limited by the solubility of the precursor in the solution. The concentration profile of the impregnated compound depends on the mass transfer conditions within the pores during impregnation and drying.

The plant according to the invention is for obtaining a main product stream with hydrocarbons from a reactant, which reactant comprises at least one substance of the group of alcohols and the group of ethers, for the production of transport fuel.

The plant according to the inventions comprises a prereactor stage to which prereactor stage the reactant is fed and in which prereactor stage the reactant is at least partially catalytically converted into an intermediate product stream, wherein the molar proportion of C2 to C5 hydrocarbon among all hydrocarbons of the intermediate product stream is at least 55 percent.

The plant according to the inventions comprises a main reactor stage to which the intermediate product stream is fed, which main reactor stage comprises a main reactor stage catalyst for oligomerizing the hydrocarbons of the intermediate product stream for obtaining a main product stream, wherein the weight proportion of C10 to C16 hydrocarbons among all hydrocarbons of the main product stream is at least 15 percent.

The plant according to the invention is characterized in that the main reactor stage catalyst is a metal organic framework catalyst.

Preferred embodiments, features and advantages of the method according to the invention correspond to preferred embodiments, features and advantages of the plant according to the invention and vice versa.

Further details, features, aims and advantages of the present invention are shown in the following with reference to figures describing embodiments. It is shown in
- Fig. 1: a schematic representation of an embodiment of the plant according to the invention for executing an embodiment of the method according to the invention;
- Fig. 2a-c: schematic representations regarding a flow of hydrocarbons through a channel comprising a) a Ni zeolite catalyst, b) a Ni amorphous silica alumina catalyst and c) a Ni MOF that may be used as MOF catalyst according to the invention;
- Fig. 3: a) PXRD of NU-1000 (curve 1) and of P'O-TA-NU-1000 (curve 2); b) Nitrogen physisorption isotherm for NU-1000, wherein both the adsorption curve (ads) and desorption curve (des) are illustrated c) Nitrogen physisorption isotherm for P'O-TA-NU-1000, wherein both the adsorption curve (ads) and desorption curve (des) are illustrated.

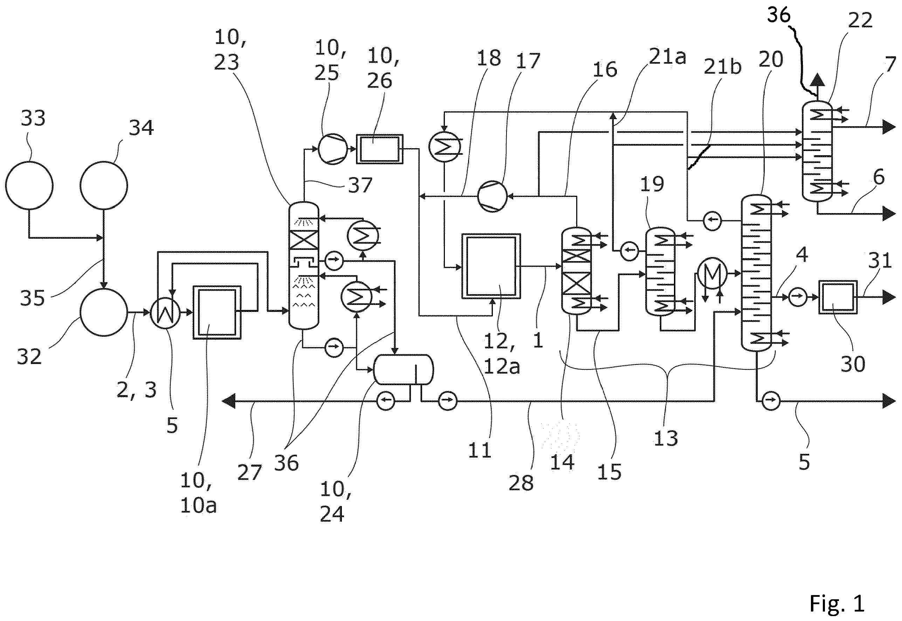

The method according to the invention may be executed by the plant according to the invention shown in Fig. 1. In the plant shown, a main product stream 1 is obtained from methanol 2 as reactant 3. That methanol 2 is "green methanol" that has been obtained from a methanol synthesis reactor 32 fed a synthesis gas 35 substantially consisting of carbon dioxide and hydrogen. The hydrogen is provided by an electrolysis plant 33 powered with electricity from renewable energy and the carbon dioxide is obtained from ambient atmosphere by a direct air capture device 34. From the main product stream 1, a jet fuel precursor stream 4, a diesel stream 5, a gasoline stream 6, a liquified petroleum gas stream 7 and a fuel gas stream 36 are obtained. With the exception of the fuel gas stream 36, the mentioned streams present transport fuel streams 8 comprising a respective transport fuel.

The reactant 3 passes a heat exchanger 9 and is fed to a prereactor stage 10 with a prereactor 10a for converting the methanol into light olefins with a SAPO-34 type catalyst. The hot gas product of the conversion in the prereactor 10a is fed to the lower section of a quench column 23 comprised by the prereactor stage 10. In the quench column 23, the higher boiling hydrocarbon components in the reactor effluent are condensed by passing a part of the bottom product from the quench column 23 via an external cooler of the prereactor stage 10 and recycling it back to the quench column 23.

Both hydrocarbon-rich liquids from the bottom section of the quench column 23 and the water-rich liquids from the top section of the quench column 23 - both presenting a respective liquid fraction 36 - are cooled further before being sent to a water/liquid extractor 24 of the prereactor stage 10 from which a water stream 27 and a hydrocarbon stream 28 is obtained.

The intermediate product stream 11 is obtained from the prereactor stage 10 by having a light olefin compressor 25 of the prereactor stage 10 compress the gaseous light olefin fraction leaving the quench column 23 at the top - presenting a gas fraction 37 - and having it dried in a standard zeolite drying unit 26 of the prereactor stage 10. This intermediate product stream 11 then is fed to main reactor stage 12 with a main reactor 12a from which the main product stream 1 is obtained.

That main product stream 1 is fed to a fractionator stage 13 with a depropanizer distillation column 14 operated at elevated pressure in which the main product stream 1 is separated into a liquid main product stream 15 and a gaseous product stream 16. That gaseous stream is split into a first sub-stream, which first sub-stream is fed to a single stage recycle gas blower 17, thereby forming a recycled gaseous stream 18, and then recycled to the main reactor stage 12 by being fed to the intermediate product stream 11. The second sub-stream is fed to a stabilizer 22 to be described in more detail below.

The liquid main product stream 15 is successively passed through a depentanizer 19 and a main fractionator 20, both comprised by the fractionator stage 13, and from which a respective liquid olefin stream 21a, 21b is obtained. Each of these liquid olefin streams 21a, b is separated into two sub-streams, of which one is recycled to the main reactor 12a as a liquid stream and the other fed to the aforementioned stabilizer 22. The aforementioned hydrocarbon stream 28 is also fed to the stabilizer 22. From the stabilizer 22, the gasoline stream 6 and the liquified petroleum gas stream 7 are obtained.

The stabilizer 22 is a distillation column which separates lighter, volatile hydrocarbons and any potentially present inert gases (as for example, hydrogen, CO₂, CO, nitrogen) from the mixture of hydrocarbon streams fed to the stablilizer 22, such that the gasoline stream 6 leaving the stabilizer 22 as the bottom product is "stable" at ambient conditions and fulfils the stability specifications applicable to gasoline transport fuel. "Stable" and "stability" refer to a composition which ensures that no relevant amount of hydrocarbon vapor is emitted during the later storage of the gasoline at ambient conditions.

The light hydrocarbons and inert compounds separated in the stabilizer 22 may leave the upper section of the stabilizer 22 as the liquified petroleum gas stream 7, which may be here understood as a "green LPG" stream and the fuel gas stream 36, which is also green in the sense of being climate-friendly. The liquified petroleum gas stream 7 preferably contains more than 80 % by weight of the C3 to C5 hydrocarbons separated from the gasoline stream 6 in the stabilizer 22. The fuel gas stream 36 contains the balance of the light hydrocarbons separated from the gasoline stream 6 in the stabilizer 22 and additionally all gaseous hydrocarbon compounds and inerts contained in the feed streams to the stabilizer 22. The fuel gas stream 36 may be used to cover the fuel demand of process streams of the plant, for example in the steam-superheater of the steam and condensate system of the plant.

From the main fractionator, the jet fuel precursor stream 4 and the diesel stream 5 are obtained. The jet fuel stream precursor 4 is fed to a hydrogenation stage 30 in order to meet jet fuel specifications and a hydrogenated jet fuel stream 31 is obtained.

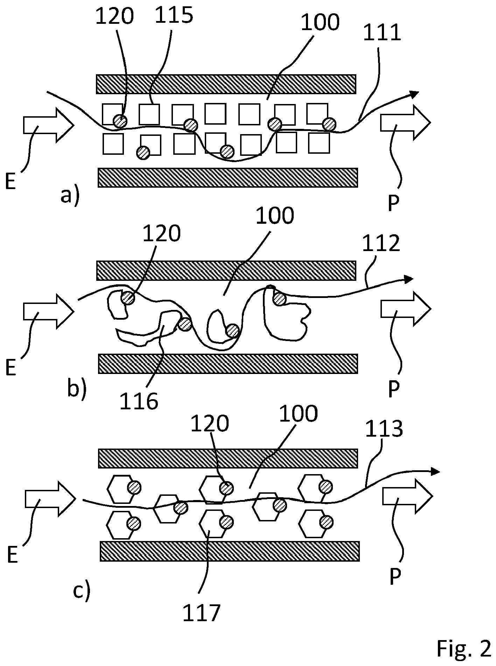

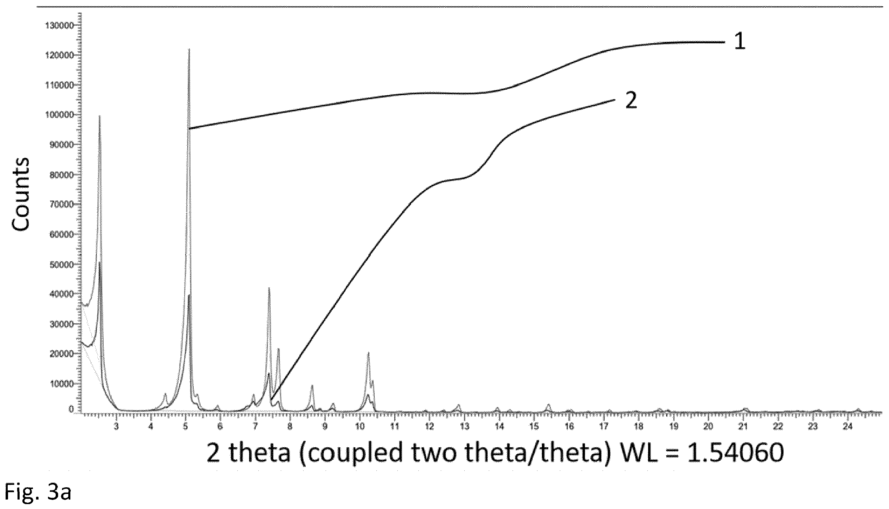

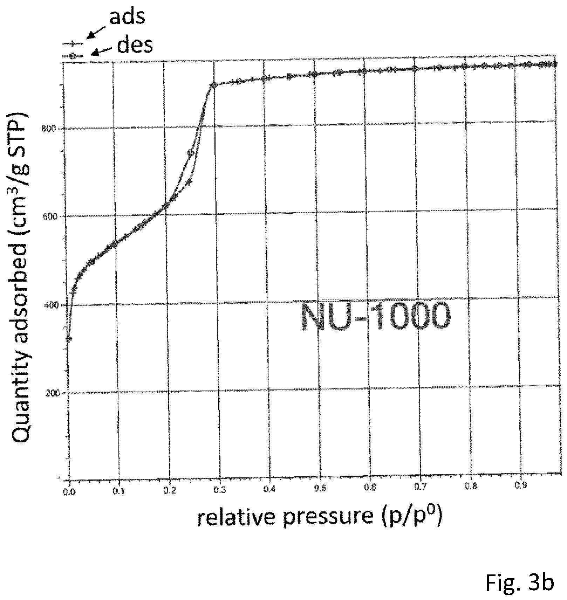

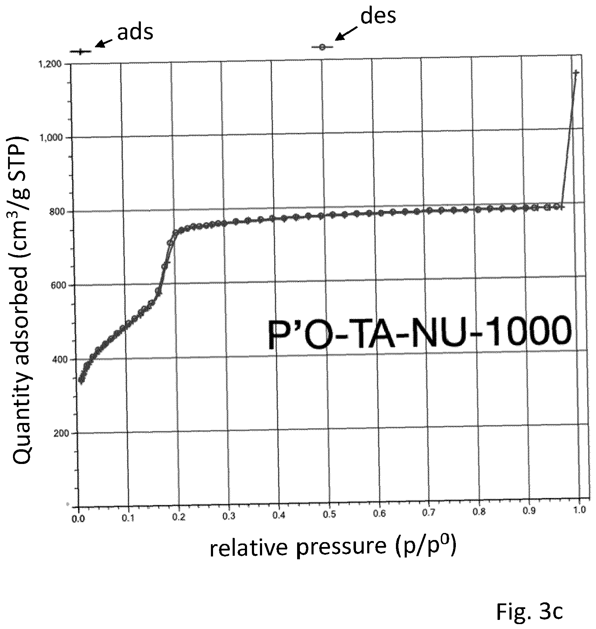

Wherein the results given in Figure 3 a)-c) are self-explaining, it is now referred to Figures 2 a) - c), illustrating a schematic flow of hydrocarbons through a channel 100 (representing a reactor) comprising a) a Ni zeolite catalyst, b) a Ni amorphous silica alumina catalyst and c) a Ni MOF that may be used as MOF catalyst according to the invention. Educt feed stream E of a first hydrocarbon composition enters the respective channel 100, the hydrocarbons flow along diffusion paths 111, 112, 113 and exit the channel 100 as product stream P. The Ni zeolite catalyst illustrated in Fig. 2a provides a well-defined pore structure, see the building blocks 115 of the catalyst. The building blocks 115 (and also the building blocks 116, 117) comprise catalytically active Ni centers 120. The relatively small pore size (e. g. 12 Angstrom) restricts the length of the hydrocarbon conversion. The diffusion of molecules flowing through the channel 100 is restricted by the structure (building blocks 115) of the catalyst, which may also cause trapping of longer molecules. The Ni amorphous silica alumina catalyst illustrated in Fig. 2b provides an ill-defined pore-structure (caused by building blocks 116) with a large range of pore sizes (e. g. 15 - 100 Angstrom). Such catalysts generally do not provide sufficient yield in the preferred range of hydrocarbons with a carbon count of 9 - 18, preferably 10 - 16 carbon atoms. Ni MOFs (which may be a MOF catalyst according to the invention) provide a well-defined pore structure with pore sizes of e. g. 30 Angstrom. Molecules may easily penetrate (diffuse) through the building blocks 117 of the catalyst. Such a catalyst has shown to be efficient for forming hydrocarbons with a carbon count of 9 - 18, preferably 10 - 16 carbon atoms.

### Experiments

The following examples are used to describe (parts of) the invention. Based on the examples, the person skilled in the art can easily conclude that and how to vary certain parameters or structures as given in the above description.

### Synthesis of functional MOFs

### Example 1 (P'O-TA-NU-1000)

A 0.1 M solution of 2-(diphenylphosphino)terephthalic acid in DMF (6.2 mL) was added to solid NU-1000 (502 mg) three-necked, round-bottomed flask under inert atmosphere. The suspension was stirred at 60 °C overnight. The solid was filtered off and washed with DMF and methanol and afterwards dried in high vacuum at 60 °C overnight to give P'O-TA-NU-1000.

### Example 2 (P-NU-1000)

A 0.1 M solution of 4-(diphenylphosphino)benzoic acid in MeCN (6.9 mL) was added to solid NU-1000 (503 mg) three-necked, round-bottomed flask under inert atmosphere. The suspension was stirred at 60 °C overnight. The solid was filtered off and washed with MeCN and methanol and afterwards dried in high vacuum at 60 °C overnight to give P-NU-1000.

### Example 3 (PS-NU-1000)

A 0.1 M solution of sodium diphenylphosphinobenzene-3-sulfonate in H₂O (6.9 mL) was added to solid NU-1000 (503 mg) three-necked, round-bottomed flask under inert atmosphere. The suspension was stirred at 60 °C overnight. The solid was filtered off and washed with H₂O and methanol and afterwards dried in high vacuum at 60 °C overnight to give PS-NU-1000.

### Synthesis of Nickel functional MOFs

### Example of Ni Catalyst preparation from functional MOF (P'O-TA)-NU-1000

P'O-TA-NU-1000 (120.3 mg) was activated by heating at 120 °C under vacuum for 4 h. A 0.1 M Ni solution was prepared dissolving Ni(acac)₂(133.9 mg) in toluene (5 mL) yielding a green solution. The Ni solution (0.5 mL) was added through incipient wetness impregnation to P'O-TA-NU-1000. The solid was dried in vacuum at room temperature to give Ni@(P'O-TA)-NU-1000.

### Example of Ni Catalyst preparation from nickel complex and non-functional MOF (Ni(PO)@ NU-1000)

NU-1000 (120.3 mg) was activated by heating at 120 °C under vacuum for 4 h. A 0.1 M Ni solution was prepared dissolving 2-(diphenylphosphino)benzoic acid (307 mg) and Ni(acac)₂ (269 mg) in toluene (10 mL) yielding a green solution. The Ni solution (0.5 mL) was added through incipient wetness impregnation to P'O-TA-NU-1000. The solid was dried in vacuum at room temperature to give Ni(PO)@ NU-1000.

### Catalysis

Ni@(P'O-TA)-NU-1000 (76 mg) was placed in a 60 mL high pressure autoclave and flushed with Ar and then shortly with ethylene gas. The reactor was then pressurized with 10 bar ethylene at room temperature for 1 h. A 0.5 M solution of NaBH₄ solution in anhydrous MeCN (0.5 mL) was added via syringe thereto. The reactor was closed, shortly flushed with ethylene gas, pressurized to 40 bar ethylene, and then heated to 80 °C for 2.5 h. The reactor was cooled down to room temperature and the pressure released. Toluene (1.3 mL) was added and the solution was transferred into a vial and analyzed by GC-FID.

### Characterization

Powder X-ray diffraction (PXRD) measurements were conducted on a Bruker D8 Advance diffractometer working in Bragg-Brentano geometry, with Cu Kα1 radiation wavelength of 1.541 Å. Diffraction was measured in the 2θ range between 2° and 25°.

Nitrogen sorption measurements were conducted on a Micromeritics 3Flex Physisorption instrument at 77 K, after activating at 120 °C under vacuum for 16-20 hours. The specific surface area was determined according to the Brunauer-Em-mett-Teller (BET) method by fitting the isotherms in the 0.01 to 0.1 p/po range to meet the consistency criteria.

UPLC-MS experiments were performed on a Waters Acquity UPLC H-Class system equipped with a Waters BEH C18 (1.7 µm) column, Acquity PDA UV/VIS and Acquity QDa ESI-MS detectors.

All MOFs were characterized by Powder X-ray diffraction and nitrogen physisorption. Figure 1a and 1b shows the PXRD and nitrogen adsorption isotherms, respectively, of NU-1000 and of P'O-TA-NU-1000. The functional MOFs and Nickel functional MOFs were characterized and the function and nickel quantified by UPLC- UV and UPLC-MS after digestion of the MOF under basic conditions.

All MOFs were characterized by Powder X-ray diffraction and nitrogen physisorption. Figure 3a shows the PXRD and Figures 3b, 3c the nitrogen adsorption isotherms, respectively, of NU-1000 and of P'O-TA-NU-1000. The functional MOFs and Nickel functional MOFs were characterized and the function and nickel quantified by UPLC- UV and UPLC-MS after digestion of the MOF under basic conditions.

## Claims

1. Method for obtaining a main product stream (1) with hydrocarbons from a reactant (3), which reactant (3) comprises at least one substance of the group of alcohols and the group of ethers, for the production of transport fuel (8), wherein the reactant (3) is fed to a prereactor stage (10), in which prereactor stage (10) the reactant (3) is at least partially catalytically converted into an intermediate product stream (11), wherein the molar proportion of C2 to C5 hydrocarbon among all hydrocarbon of the intermediate product stream (11) is at least 55 percent, wherein the intermediate product stream (11) is fed to a main reactor stage (12), in which main reactor stage (12) the hydrocarbons of the intermediate product stream (11) are oligomerized by means of a main reactor stage catalyst for obtaining the main product stream (1), wherein the weight proportion of C10 to C16 hydrocarbons among all hydrocarbons of the main product stream (1) is at least 15 percent, **characterized in that** the main reactor stage catalyst is a metal organic framework catalyst.

2. Method according to claim 1, **characterized in that** the molar proportion of olefinic hydrocarbons among all hydrocarbons of the intermediate product (11) stream is at least 50 percent, preferably at least 80 percent.

3. Method according to one of claims 1 to 2, **characterized in that**, from the main product stream (1) at least one transport fuel stream (8) is obtained, preferably, that the main product stream (1) is at least partially fed to a fractionator stage (13) to obtain the at least one transport fuel stream (8), that the weight proportion of the C10 to C16 hydrocarbons among all hydrocarbons of the at least one transport fuel stream (13) is at least 35 percent, in particular at least 50 percent.

4. Method according to claim 3, **characterized in that** the at least one transport fuel stream (8) comprises a jet fuel stream and/or a jet fuel precursor stream (4) and/or a diesel stream (5) and/or a gasoline stream (6).

5. Method according to claim 4, **characterized in that** the jet fuel stream and/or a hydrogenated jet fuel stream (31) primarily comprises jet fuel, in particular, that the jet fuel stream and/or the hydrogenated jet fuel stream (31) substantially consists of jet fuel.

6. Method according to one of claims 3 to 5, **characterized in that** at least one recycle stream is obtained from the fractionator stage (13) and recycled to the main reactor stage (12), preferably, that the at least one recycle stream comprises a liquid recycle stream recycled to the main reactor stage (12) with a pressure drop from the fractionator stage (13) to the main reactor stage (12).

7. Method according to one of claims 3 to 6, **characterized in that** the fractionator stage (13) comprises a depropanizer distillation column (14) for separating the main product stream (1) at least into a liquid main product stream (15) and a gaseous stream (16) and that the gaseous stream (16) is at least partially recycled to the main reactor stage (12), preferably, that the recycled gaseous stream (18) is compressed by a recycle gas blower, in particular, a single stage recycle gas blower (17).

8. Method according to one of claims 3 to 7, **characterized in that**, the molar proportion of olefinic C10 to C16 hydrocarbons among all C10 to C16 hydrocarbons of at least one of the at least one transport fuel streams (8), preferably the jet fuel precursor stream (4), is at least 60 percent, preferably at least 90 percent.

9. Method according to one of claims 3 to 8, **characterized in that** one of the transport fuel streams (8), preferably the jet fuel precursor stream (4), is at least partially fed to a hydrogenation stage (30) from which a hydrogenated transport fuel stream, in particular a hydrogenated jet fuel stream (31), is obtained, further preferably, that a molar proportion of paraffinic C10 to C16 hydrocarbons among all C10 to C16 hydrocarbons of the hydrogenated jet fuel (31) stream is at least 70 percent, preferably, that a molar proportion of olefinic C10 to C16 hydrocarbons among all C10 to C16 hydrocarbons of the hydrogenated jet fuel stream (31) is at most 20 percent, in particular, at most 5 percent.

10. Method according to one of claims 1 to 9, **characterized in that** the reactant (3) is methanol (2) or dimethyl ether, preferably that the dimethyl ether is derived from methanol (2).

11. Method according to claim 10, **characterized in that** the methanol is obtained by synthesis from a synthesis gas (35) comprising hydrogen and at least one of carbon monoxide and carbon dioxide, preferably, that the carbon dioxide is obtained from ambient atmosphere by a direct air capture (DAC) device (34) and/or or from the combustion of biomass, further preferably, that the hydrogen is obtained from water by electrolysis, in particular, that the electrolysis is powered by electricity from renewable energy.

12. Method according to claim 11, **characterized in that** the synthesis gas (35) is obtained from the gasification of biomass.

13. Method according to one of claims 1 to 12, **characterized in that** for the catalytic conversion in the prereactor stage (10) a silico-alumino-phosphate molecular sieve catalyst, preferably a SAPO-34-catalyst, or a zeolite catalyst, in particular a zeolite catalyst of the ZSM-5 type, is used.

14. Method according to one of claims 1 to 13, **characterized in that** the prereactor stage (10) comprises a prereactor device (10a) for catalytic conversion of the reactant (3) and a quench column (23), from which quench column (23) the intermediate product stream (11) is obtained as gas fraction (37), preferably, that a liquid fraction (36) with carbon hydrates is obtained from the quench column (23), in particular, that the liquid fraction is fed to the main reactor stage (12) and/or to the fractionator (20).

15. Method according to one of claims 1 to 14, **characterized in that** the metal organic framework (MOF) catalyst comprises a MOF lattice and a catalytically active site hosted in the MOF lattice, wherein the MOF lattice comprises a number of nodes and a number of linkers interconnecting the nodes, wherein the catalytically active site comprises a structure of formula (1): 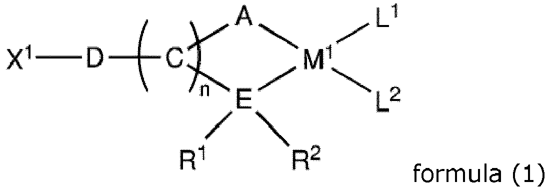 wherein in the structure of formula (1):
- M¹ is a transition metal;
- L¹ and/or L² are independently selected from: H, an alkyl group, an aryl group, an olefin, an organic group comprising a hetero-atom such as oxygen or nitrogen, CO, NO, NO₂, CO₂, a halogen atom, or wherein formula (1) does not comprise L¹ and/or L²;
- E is selected from P, N, As, O, S, Bi;
- R¹ is selected from H, P, an alkyl group, an aryl group, or wherein formula (1) does not comprise R¹;
- R² is selected from R¹;
- A is selected from O, N, S, a carboxylate group, an alcoholate group, a sulfide group, a sulfonate group, a phosphate group, an ester group, an amine group, an imine group, a pyridine group, ER¹R², or L¹;
- Cₙ relates to a carbon chain with a number of n carbon atoms, wherein n = 1 - 5;
- D is an aliphatic group or aryl group, wherein D is bound to one or more of the carbon atoms of Cₙ;
- X¹ is selected from a carboxylic acid group, sulfonic acid group, a carboxylate group, a sulfonate group, a carbonyl group, a hydroxyl group, a hydroxylate group, an amino group, an ammonium group, a phosphino group, a phosphonium group, a pyridine group, a pyridine derivative, an imidazole group, an imidazole derivative, an imidazolate group, a phosphonate group, a phosphonate derivative, a nitrile group, a boronic acid group, a boronic acid ester group, a triazole group, a triazolate group, a tetrazole group, a tetrazolate group or wherein formula (1) does not comprise X¹,
wherein the catalytically active site is bound or coordinated to the MOF lattice, wherein the catalytically active site is preferably bound or coordinated to the MOF lattice via X¹.

16. Method according to claim 15, **characterized in that** M¹ is selected from Ni, Pd, Pt, Co, Fe, Ru, Rh, Ir, Os, W, wherein M¹ preferably is Ni.

17. Method according to claim 15 or 16, **characterized in that**
a) regarding L¹ and/or L²,
- the organic group comprising oxygen as hetero-atom is selected from THF, an alcohol group, an alcoholate group or an acetylacetonate group,
- the organic group comprising a nitrogen as hetero-atom is selected from an amine group, an imine group, an amide group or a nitrile group,
- the halogen atom is CI, Br, or I; and/or
b) A preferably is a carboxylate or an alcoholate; and/or
c) Cₙ is C₂; and/or

18. Method according to one of claims 15 to 17, **characterized in that**
a) the nodes of the MOF are independently defined by a structure of M²_{w}L³_{z}, wherein
- M² refers to one or more atoms of an element, wherein the element preferably is a metal, a semi-metal, an alkali metal, or an earth alkali metal,
- w = 1 - 24,
- L³ refers to a ligand binding or coordinating to M² via O, N, S, P, C, CI, Br, I,
- z = 0 - 24; and/or
b) the linkers of the MOF are independently defined by a structure of R³ₓX²_{y}, wherein
- R³ refers to a structure comprising a number of m = 2 - 50 C atoms, wherein the structure comprises one or more functional groups selected from an amino group, an imido group, an amido group, a cyano group, a nitro group, an aldehyde group, an urea group, a thiourea group, an ester group, a carbonate group, an alcohol group, an ether group, a halogen, a phosphine derivative, a phosphine oxide derivative, an imidazolium group, a pyridino group, a triazole group, an imidazole group, a phosphate group, a sulfonic acid group, a sulfonate group, an enolate group, an imine group, a phenantroline group or combinations thereof, or wherein the structure does not comprise any of said functional groups,
- X² is selected from a carboxylic acid group, a sulfonic acid group, a carboxylate group, a sulfonate group, a carbonyl group, a hydroxyl group, a hydroxylate group, an amino group, an ammonium group, a phosphino group, a phosphonium group, a pyridine group, a pyridine derivative, an imidazole group, an imidazole derivative, an imidazolate group, a phosphonate group, a phosphonate derivative, a nitrile group, a boronic acid group, an ester group, a triazole group, a triazolate group, a tetrazole group, a tetrazolate group,
- x = 1 - 8;
- y = 1 - 8.

19. Plant for obtaining a main product stream with hydrocarbons from a reactant, which reactant comprises at least one substance of the group of alcohols and the group of ethers, for the production of transport fuel, wherein the plant comprises a prereactor stage to which prereactor stage the reactant is fed and in which prereactor stage the reactant is at least partially catalytically converted into an intermediate product stream, wherein the molar proportion of C2 to C5 hydrocarbon among all hydro-carbon of the intermediate product stream is at least 55 percent, wherein the plant comprises a main reactor stage to which the intermediate product stream is fed, which main reactor stage comprises a main reactor stage catalyst for oligomerizing the hydrocarbons of the intermediate product stream for obtaining a main product stream, wherein the weight proportion of C10 to C16 hydrocarbons among all hydrocarbons of the main product stream is at least 15 percent, **characterized in that** the main reactor stage catalyst is a metal organic framework catalyst.
